# EUROPÄISCHE PATENTANMELDUNG

(11) **EP 1 376 319 A1**
(43) Veröffentlichungstag der Anmeldung: **02.01.2004**
(21) Anmeldenummer: 03010694.2
(22) Anmeldetag: 13.05.2003
(51) Int. Cl.: G06F 3/02, H04M 1/725

(54) **Tragbares computerbasiertes Eingabegerät**

(30) Priorität: 28.06.2002 DE 10229068
(71) Anmelder: Fujitsu Siemens Computers GmbH, 81739 München (DE)
(72) Erfinder: Gerstner, Robert, 86163 Augsburg (DE); Filimon, Diana, 86368 Gersthofen (DE)
(74) Vertreter: Epping Hermann & Fischer

(57) **Zusammenfassung**

Die Erfindung betrifft ein tragbares computerbasiertes Gerät, wobei tragbare computerbasierte Geräte wie z. B. PDA, Handy oder Notebook als Bedienelement für zweite computerbasierte Geräte einsetzbar sind. Ein erfindungsgemäßes tragbares computerbasiertes Gerät ist in der Lage, Mouse- und Tastatureingaben für ein anderes Gerät zu emulieren und an das fernzusteuernde zweite computerbasierte Gerät zu übermitteln.

## Beschreibung

Die Erfindung betrifft ein tragbares computerbasiertes Gerät.

Tragbare computerbasierte Geräte wie PDAs (Personal Digital Assistant), Handys (Mobiltelefon) oder Notebooks (tragbarer Computer) erfreuen sich aufgrund ihrer kompakten Bauform immer größerer Beliebtheit. Zudem besitzen die Geräte Funk und IR-Schnittstellen die zur Übertragung von Daten geeignet sind. Diese Geräte befinden sich auch aufgrund ihrer ureigensten Aufgabe stets in Reichweite eines Anwenders.

Dennoch ist der Einsatzbereich dieser Geräte begrenzt. Dies steht im deutlichen Gegensatz zu dem oftmals sehr hohen Anschaffungspreis für diese Geräte. Es ist deshalb wünschenswert, die Einsatzmöglichkeiten solcher, hochpreisigen, tragbaren und computerbasierten, Geräte zu erweitern.

Es sind für tragbare computerbasierte Geräte wie zum Beispiel PDA's Anwendungen bekannt, die den ursprünglichen Einsatzzweck von PDA's dahingehend erweitern, daß diese Geräte als vielseitige Fernbedienungen für Geräte der Unterhaltungselektronik, wie TV-Geräte oder Hifi-Geräte einsetzbar sind. Anwendungen dieser Geräte als Bedienelemente, bzw. Eingabegeräte für computerbasierte Geräte sind nicht bekannt. Wesentliche Bedienelemente dieser zweiten computerbasierten Geräte sind z. B. Mouse und/oder Tastatur, womit die Anwendungen des Computers mit Daten gefüttert und bedient werden. Alternativ sind solche Eingabegeräte auch als drahtlose Geräte bekannt, die über eine Funk- oder Infrarotstrecke mit dem zweiten computerbasierten Gerät verbunden sind.

Es ist die Aufgabe der Erfindung, diese Situation zu verbessern.

Diese Aufgabe wird durch computerbasierte tragbare Geräte gemäß Patentanspruch 1 gelöst und in den untergeordneten Ansprüchen vorteilhaft weitergebildet.

Dabei werden tragbare computerbasierte Geräte wie z. B. PDA, Handy oder Notebook als Bedienelement für zweite computerbasierte Geräte einsetzbar. Ein erfindungsgemäßes tragbares computerbasiertes Gerät ist in der Lage, Mouse- und Tastatureingaben für ein anderes Gerät zu emulieren und an das fernzusteuernde zweite computerbasierte Gerät zu übermitteln. Die Vorteile eines solchen tragbaren computerbasierten Gerätes lassen sich wie folgt zusammenfassen:
1. Durch Nutzung von Standardübertragungswegen ist eine Vielzahl von zweiten computerbasierten Geräten ansteuerbar.
2. Vorhandene-Hardware wie PDA, Handy oder Notebook stellen durch die zusätzlichen Funktionen eine Alternative zu den sonst üblichen, bzw. notwendigen Zusatzgeräten als Bedienelemente dar.
3. Gerätespezifische Eingabegeräte der zweiten computerbasierten Geräte sind ersetzbar.
4. Eine Vielzahl von drahtlosen Anbindungsmöglichkeiten auf das zu steuernde zweite computerbasierte Gerät, wie z. B. WLAN, IR, "Bluetooth" ist nutzbar.
5. Komplexe Bedienungsschritte wie z. B. Tastenkombinationen oder Tasteneingabefolgen können zusammengefasst werden und dann durch eine einfache Aktion wie zum Beispiel einem Tastendruck, oder ein Schriftkürzel, abgerufen und übermittelt werden.

Vorteilhafte Ausführungsformen des tragbaren computerbasierten Gerätes sind z. B. ein PDA, Handy oder Notebook mit Infrarotanbindung an ein zweites computerbasiertes Gerät. Mit diesem tragbaren computerbasierten Gerät eröffnen sich vielseitige Bedienungsmöglichkeiten für das zweite computerbasierte Gerät. So sind, über die am Display des PDAs angezeigte PopUp-Tastatur, Tastenkombination für die Emulation komplexer Befehlsketten erzeugbar. Desweiteren ist der Touchscreen des PDA als Touchpad für das zweite computerbasierte Gerät benutzbar. Ebenso sind, spezielle Mousebewegungen bzw. Mousepositionierungen per Software oder per Tastendruck durchführbar. Dazu gehören zum Beispiel die Positionierung der Mouse oder des Cursors in eine der Bildschirm oder Display-Ecken oder die Positionierung der Mouse oder des cursors in die Mitte des Bildschirms oder Displays, oder in die Mitte einer der Bildschirm oder Displayseiten. Desweiteren sind vielgenutzte Tastaturkommandos schnell erzeugbar.

Bei einer Erweiterung der Datenübertragung zwischen dem PDA, Handy oder Notebook auf einen bidirektionalen Datenverkehr, wobei Daten von dem fernzusteuernden Gerät an das fernsteuernde Gerät zurücksendbar sind, ergeben sich weitere vielseitige Anwendungsvariänten, zum Beispiel: Information- oder Statusanzeigen des ferngesteuerten Gerätes auf dem tragbaren bzw. fernsteuernden Gerät.

Das erfindungsgemäße computerbasierte Gerät ist in der Lage, mit verschiedenen Funkprotokollen, wie zum Beispiel "Bluetooth" oder WLAN oder eine Funk-Draht-Kombination mit einem geeignetem Zusatzgerät mit USB, Kontakt zu dem zweiten fernzusteuernden computerbasierten Gerät zu halten. Alternativ ist das tragbare computerbasierte Gerät auch über eine drahtgebundene Verbindungsstrecke, z. B. ein USB an das zweite computerbasierte Gerät anschließbar.

Es ist gemäß einer vorteilhaften Weiterbildung des computerbasierten Gerätes ein Notebook zur Fernsteuerung eines zweiten computerbasierten Geräts einsetzbar. Damit sind Ferneingaben über die Notebook-Tastatur und Notebook-Mouse realisierbar.

Sehr vorteilhaft ist auch die Möglichkeit einer erfindungsgemäßen Weiterbildung eines computerbasierten Gerätes wie beispielsweise eines Handys, wobei dies zur Emulation einer Mousefunktion gegenüber einer Menübedienung eines TV-Geräts heranziehbar ist.

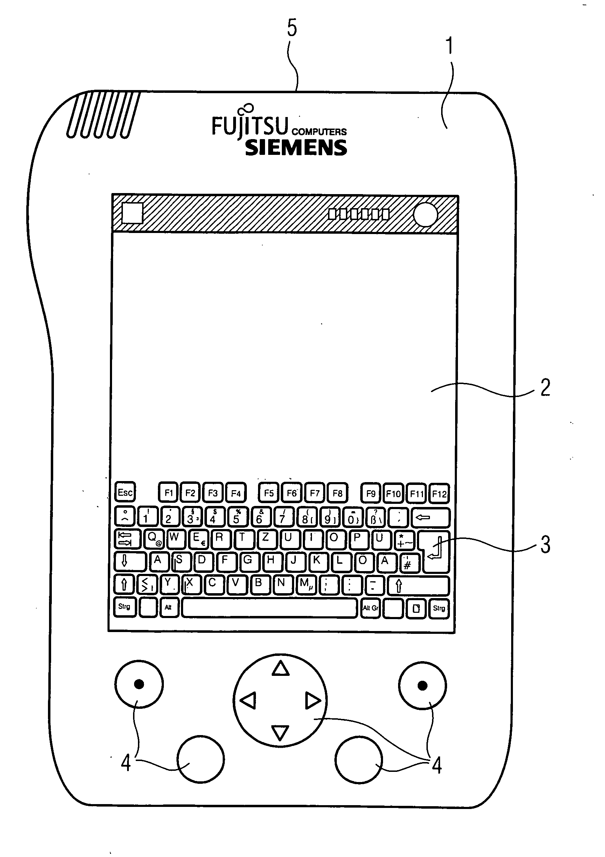

Im folgenden ist die Erfindung unter der Bezugnahme auf ein Ausführungsbeispiel und eine Zeichnung erläutert. Die Figur zeigt einen erfindungsgemäßen PDA, stellvertretend für andere computerbasierte Geräte.

Der erfindungsgemäße PDA 1 weist eine Schnittstelle 5 auf. Diese Schnittstelle 5 ist alternativ als Funk- oder Infrarotschnittstelle ausgeführt, wobei im Falle einer Funkschnittstelle diese den Protokollen von zum Beispiel "Bluetooth" oder WLAN entspricht.

Desweiteren verfügt der PDA 1 über einen Touchscreen bzw. Touchpad 2, das vorzugsweise als Eingabeelement für Mousepositionierungen gegenüber dem zweiten computerbasierten Gerät dient.

Desweiteren weist der PDA 1 am unteren Ende 3 des Touchscreen eine Darstellung einer vollständigen Tastatur auf, wobei die Zeichen durch Berührung mit einem spitzen Gegenstand ausgewählt und selbständig durch den PDA 1 an das zweite computerbasierte Gerät übergeben werden.

Desweiteren verfügt der PDA 1 über Mousepositionierungstasten 4, die eine schnelle Bewegung des Mousezeigers am ferngesteuerten zweiten computerbasierten Gerät in ganz vorbestimmte Positionen wie z. B. links oben, rechts unten, links unten, rechts unten oder Bildschirmmitte, oder wahlweise auch in andere vorbestimmte Positionen ermöglichen.

Zunächst ist vorstehend die Anwendung für computerbasierte Geräte wie zum Beispiel PDAs, Handys, oder Notebooks beschrieben, wobei diese ein zweites computerbasiertes Gerät wie PCs oder ähnliches bedienbar machen. Die Erfindung ist jedoch nicht allein an diese Ausführungsbeispiele gebunden. Vielmehr ist klar erkennbar, daß der Grundgedanke der Erfindung auf weitere Kombinationen computerbasierter Geräte anwendbar ist.

## Patentansprüche

1. Tragbares computerbasiertes Gerät wie zum Beispiel PDA, Handy oder Notebook, als Bedienelement für ein zweites computerbasiertes Gerät,
**dadurch gekennzeichnet, daß**
das tragbare computerbasierte Gerät als Eingabegerät, wie zum Beispiel Maus oder/und Tastatur, gegenüber dem zweiten computerbasiertem Gerät einsetzbar ist.

2. Tragbares computerbasiertes Gerät nach Patentanspruch 1,
**dadurch gekennzeichnet, daß**
zur Übertragung der Daten zwischen dem ersten und dem zweiten computerbasierten Gerät eine Infrarotschnittstelle besteht.

3. Tragbares computerbasiertes Gerät nach Patentanspruch 1,
**dadurch gekennzeichnet, daß**
zur Übertragung der Daten zwischen den beiden computerbasierten Geräten eine Funkverbindung besteht.

4. Tragbares computerbasiertes Gerät nach Patentanspruch 3,
**dadurch gekennzeichnet, daß**
die Funkverbindung gemäß den Protokollen von "Bluetooth" oder WLAN oder GSM/GPRS durchgeführt wird.

5. Tragbares computerbasiertes Gerät nach Patentanspruch 1,
**dadurch gekennzeichnet, daß**
zur Übertragung der Daten zwischen den beiden computerbasierten Geräten eine Drahtverbindung besteht.

6. Tragbares computerbasiertes Gerät nach Patentanspruch 5,
**dadurch gekennzeichnet, daß**
die Drahtverbindung nach den Protokollen von seriellen Verbindungen, USB, Firewire oder LAN durchgeführt wird.

7. Tragbares computerbasiertes Gerät nach einem der vorhergehenden Patentansprüche,
**dadurch gekennzeichnet, daß**
ein Touchscreen des computerbasierten Gerätes als "Remote Touchpad" nutzbar ist.

8. Tragbares computerbasiertes Gerät nach einem der vorhergehenden Patentansprüche,
**dadurch gekennzeichet, daß**
Bewegungen und/oder Positionierungen des Mousezeigers/Cursers auf dem zweiten computerbasiertem Gerät durch vorbestimmte Tasten ausführbar sind.

9. Tragbares computerbasiertes Gerät nach einem der vorhergehenden Patentansprüche,
**dadurch gekennzeichet, daß**
Tastatureingabefolgen des zweiten computerbasierten Gerätes durch vorbestimmte Tasten auf dem tragbarem Gerät ausführbar sind.

10. Tragbares computerbasiertes Gerät nach einem der vorhergehenden Patentansprüche,
**dadurch gekennzeichet, daß**
die Datenübertragungswege zwischen dem computerbasiertem Gerät und dem zweitem computerbasiertem Gerät bidirektional sind.
